# EUROPÄISCHE PATENTSCHRIFT

(11) **EP 0 721 439 B1**
(45) Veröffentlichungstag und Bekanntmachung des Hinweises auf die Patenterteilung: **08.04.1998**
(21) Anmeldenummer: 94928849.2
(22) Anmeldetag: 30.09.1994
(51) Int. Cl.: C04B 38/06

(54) **FORMTEIL**
MOLDED ARTICLE
PIECE MOULEE

(30) Priorität: 02.10.1993 DE 4333639
(43) Veröffentlichungstag der Anmeldung: 17.07.1996
(73) Patentinhaber: CERASIV GmbH INNOVATIVES KERAMIK-ENGINEERING, D-73207 Plochingen (DE)
(72) Erfinder: NAGEL, Alwin, D-73257 Köngen (DE); ROGOWSKI, Dirk, D-73061 Bünzwangen (DE)
(74) Vertreter: Uppena, Franz, Dr.
(86) Internationale Anmeldenummer: EP9403265
(87) Internationale Veröffentlichungsnummer: WO9509822

(56) Entgegenhaltungen:
- AU-B- 478 654
- CH-A- 604 826
- DE-A- 2 150 735
- CHEMICAL ABSTRACTS, Band 116, Nr. 2, 13 Jänner 1992, Columbus, OH (US); AN 10397n
- CHEMICAL ABSTRACTS, Band 118, Nr. 26, 28 Juni 1993, Columbus, OH (US); AN 259867h
- DATABASE WPI, Woche 8937, Derwent Publications Ltd., London (GB); AN 89-266690

## Beschreibung

Die vorliegende Erfindung betrifft selbsttragende, hochporöse, pulvertechnologisch hergestellte Formteile aus metallischen oder nichtmetallischen Feststoffen, Verfahren zu deren Herstellung, sowie die Verwendung der erfindungsgemäßen Formteile.

Poröse keramische Formkörper sind an sich bekannt. Sie werden beispielsweise über organische Schaumstoffkörper, die mit einem keramischen Schlicker getränkt werden, hergestellt. Nach dem Trocknen und Ausbrennen der organischen Bestandteile bleibt als Negativ des Schaumstoffkörpers der poröse keramische Formkörper zurück (sog. "lost form"-Verfahren; DE-OS 23 01 662). Eine andere Möglichkeit besteht in der direkten Aufschäumung eines in einer Form befindlichen keramischen Schlickers durch Treibmittel und anschließender Trocknung. Ebenso möglich ist die Verwendung organischer Füllstoffe als Porenbildner in keramischen Massen bei der Herstellung von porösen Formkörpern. Die Nachteile dieser im Stand der Technik bekannten porösen Formkörper sind die Begrenzung des Porenanteils, die Ausbildung einer geschlossenen Porosität, die im mikroskopischen Maßstab inhomogene Porenverteilung, der hohe Bedarf an organischen Füllstoffen, die zeitaufwendige Herstellung oder die Beschränkung auf feine Pulver.

In der DE-OS 41 02 430 wird ein Verfahren zur Herstellung feinporiger Festkörper mit hohem Porenvolumen beschrieben, bei dem eine grobdisperse, sedimentationsfähige Mischung aus einer flüssigen Phase und festen Teilchen zur Sedimentation gebracht und das Sediment in Gegenwart der flüssigen Phase durch chemische Reaktion zwischen den Sedimentpartikeln zu einem porösen Körper verfestigt wird, der eine ausreichende Formstabilität für eine Wärmebehandlung aufweist. Diese Festkörper werden anschließend vorzugsweise bei einer Temperatur von über 1000°C gesintert. Der Nachteil bei diesem Verfahren besteht darin, daß die flüssige Phase und die Sedimentationspartikel aufeinander abgestimmt werden müssen, damit eine chemische Reaktion zwischen den Sedimentpartikeln ermöglicht wird. Die Sedimentpartikel sind durch die chemische Reaktion direkt, ohne Bindemittel miteinander verbunden. Es entstehen somit einphasige, feinporige Festkörper.

In der DE-OS 21 50 735 wird eine hochporöse keramische Leichtbauplatte mit Wasserglas als Bindemittel beschrieben, die durch ein pulvertechnologisches Verfahren hergestellt werden kann.

Aus der AU-B-478 564 ist ein Filtermaterial auf Basis von Keramik und anorganischem Bindemittel bekannt, bei dem die Porosität 50 Vol.-% beträgt.

Aus CA, Vol.118 (1993); No.26; 259867h ist ein pulvertechnologisches Verfahren zur Herstellung poröser Formkörper bekannt, bei dem eine Gefriertrocknungsstufe vorgesehen ist.

Verwendung finden poröse keramische Formkörper in vielfältiger Weise. Sie eignen sich beispielsweise zum Einsatz als Leichtbaustein, als Trägermaterial für andere flüssige oder feste Phasen, als Isolations-, Konstruktions-, Füll- oder Filtermaterial. Ein besonderes Einsatzgebiet hat sich den porösen keramischen Formkörpern in neuerer Zeit erschlossen. Zur Reduzierung der Fahrzeuggesamtmasse werden im Personenwagenbau in zunehmenden Maße Leichtbauwerkstoffe verwendet. Um die notwendigen Stabilitäten zu gewährleisten, werden poröse keramische Formkörper mit den Leichtmetallegierungen infiltriert.

Die Aufgabe der vorliegenden Erfindung bestand darin, poröse, pulvertechnologisch herstellbare keramische Formkörper bereitzustellen, die die Nachteile der aus dem Stand der Technik bekannten porösen Formkörper nicht aufweisen.

Gelöst wird die Aufgabe durch die Merkmale des Hauptanspruchs. Vorzugsweise Ausgestaltungen sind in den Unteransprüchen charakterisiert.

Pulvertechnologisch wird ein hochporöses, selbsttragendes Formteil aus metallischen oder nichtmetallischen Feststoffen (Feststoffphase/n) und mindestens einem Bindemittel (Bindemittelphase/n) hergestellt, bei dem die Porosität 50 bis 90 Vol.-% beträgt, die Feststoffpartikel durch das oder die Bindemittel miteinander verbunden sind und die Porengröße um den Faktor 2 bis 5 größer ist als die mittlere Korngröße des verwendeten Feststoffs. Als Feststoffe können allein oder als Mischung organische Pulver, beispielsweise Kohlenstoff, natürliche oder synthetische Polymere, metallische Bestandteile, wie beispielsweise Kupfer, Messing, Bronze, Magnesium, Zink, Blei, Aluminium, Silizium, Titan, Vanadium, Mangan, Eisen, Kobalt, Chrom, Molybdän, Nickel oder intermetallische Phasen der Elemente oder Carbide, Nitride, Silizide, Boride, Oxide der Elemente oder Kombinationen wie beispielsweise TiCN oder FeBₓ oder Mischungen dieser Bestandteile eingesetzt werden. Die Feststoffe werden in Mengen von 10 bis 40 Vol.-%, vorzugsweise 15 bis 30 Vol.-% eingesetzt. Die Korngröße kann dabei von 0,5 bis 500 µm, vorzugsweise von 1 bis 200 µm variieren und kann in jedem Einzelfall auf den jeweiligen Anwendungsfall abgestimmt werden. Gegebenenfalls können außerdem Zusatzstoffe enthalten sein. Hierzu zählen Stoffe, die im Vergleich zu den eingesetzten Feststoffen relativ weich sind, beispielsweise Molybdänsulfid oder Graphit.

Als anorganische Bindemittel können solche eingesetzt werden, die die Feststoffpartikel miteinander verbinden, ohne daß für die Bindung eine chemische Reaktion zwischen den Feststoffpartikeln erforderlich ist. Geeignet sind beispielsweise Bindemittel auf Phosphat-, Borat-, Sulfat-, Oxid- oder Silikatbasis, besonders bevorzugt kann Natronwasserglas in Mengen von 1 bis 15 Vol.-%, vorzugsweise von 3 bis 7,0 Vol.-% eingesetzt werden. Ebenfalls verwendbar ist Bentonit. Die Pulverkorngröße der eingesetzten Binder kann von 0,1 bis 30 µm variieren. Je nach Anwendung können die anorganischen Binder durch Zugabe von beispielsweise Alkali, Erdalkali, Bor oder ähnlichem in ihren Schmelzpunkten und/oder ihrem Benetzungsverhalten modifiziert werden.

Die Porosität der erfindungsgemäßen Formkörper kann 50 bis 90% betragen, wobei die Porengrößenverteilung durch die Größenverteilung der eingesetzten Feststoffe, des anorganischen Binders und durch die thermische Behandlung einzustellen ist.

Erfindungsgemäß werden die Formteile auf folgende Weise hergestellt: Die Bestandteile Feststoffpulver, anorganische(r) Binder, organische(s) Bindemittel und gegebenenfalls die Zusatzstoffe werden in Wasser beispielsweise mittels eines konventionellen Rührwerks oder eines schnellaufenden Dissolveraggregats gemischt und dispergiert. Das organische Bindemittel besteht aus wasserlöslichen und/oder dispergierbaren Substanzen wie beispielsweise Methylcellulose, Polyvinylalkohol, Alginat, Stärke oder Agar-Agar oder auch aus Kombinationen dieser Substanzen. Bei der Herstellung des Schlickers kann zur Erhöhung der Viskosität gegebenenfalls ein Stellmittel, beispielsweise Bentonit zugesetzt werden, wodurch Sedimentation oder Entmischungvermieden werden kann. Schaumbildung kann durch Zugabe eines Entschäumers verhindert werden. Um die Auflösung der Hilfsmittel zu erleichtern, kann der Gießschlicker während des Rührens erwärmt werden, gegebenenfalls bis auf über 90°C. Der Schlicker wird anschließend je nach eingesetztem organischen Bindemittel entweder nach dem Gelgießverfahren oder nach dem Gefriergießverfahren in die dem Formteil entsprechende negative Gießform gegossen. Die Gießform kann aus beliebigen porenfreien, glatten Materialien wie beispielsweise Aluminium, Kunststoff oder Stahl bestehen und muß in ihren Dimensionen auf die nachfolgender. homogenen Maßänderungen, die durch Schwindung beim Trocknen oder der Temperaturbehandlung eintreten, abgestimmt sein. Je nach gewünschter Geometrie kann die Gießform teilbar sein. Beim Gefriergießverfahren kann die Form auch wie eine konventionelle Spritzgußform für die Kunststoffverarbeitung ausgebildet sein. Die Einspritzgeschwindigkeit ist in diesem Fall abhängig vom Versatz und der Geometrie und ist einstellbar. Der Einspritzdruck kann je nach der eingestellten Viskosität von 10 kPa bis zu hohen Drücken von 100 MPa variiert werden. Vorteilhafterweise werden die Gießformen vor dem Gießen mit einem Trennmittel, beispielsweise mit Seife, Fett oder Öl beschichet.

Bei Verwendung organischer Bindemittel mit temperaturbedingtem Sol-Gel-Übergang, beispielsweise Stärke oder Agar-Agar, wird der Schlicker nach dem Gelgießverfahren warm in die negative Gießform gegossen, in der er sich beim Erkalten verfestigt. Nach dem Gelieren des Formteils kann dieser entweder der Form entnommen und anschließend eingefroren werden oder die Entformung erfolgt im gefrorenen Zustand, falls dies beispielsweise aus Stabilitätsgründen, speziell bei dünnen Wandstärken erforderlich ist. Bei Verwendung nicht gelierfähiger organischer Bindemittel, wie beispielsweise Methylcellulose oder Polyvinylalkohol, wird der Schlicker nach dem Gefriergießverfahren bei Temperaturen von 0 bis 30°C in eine auf -60 bis -5°C vorgekühlte Form gegossen. Hierbei gefriert der Wasseranteil, abhängig von den gelösten Bindern und Salzen, bei Temperaturen von -30°C bis 0°C. Der homogene Schlickerzustand wird hierbei fixiert und verfestigt. Das Formteil wird der kühlbaren Form entnommen und kann im gekühlten Zustand zwischengelagert werden.

Das erhaltene, eingefrorene Formteil wird anschließend in einem Vakuum von maximal 600 Pa (6 mbar) und einer Temperatur, die sicherstellt, daß das Formteil an keiner Stelle aufschmilzt, beispielsweise einer Temperatur von 0 bis 60°C, getrocknet.

Bei diesem Trocknungsprozeß sind die Bedingungen außerdem so zu wählen, daß eine zu schnelle und damit inhomogene Trocknung möglichst vermieden wird. Hierdurch kann sichergestellt werden, daß keine Risse bei der durch die Trocknung erfolgenden linearen Schwindung von 1 bis 8% erzeugt werden. Die Trocknungszeit hängt ab von der Geometrie und den Wandstärken des Formteils und kann bis zu 100 Stunden betragen. Der getrocknete Grünkörper besteht aus den mit dem oder den organischen Binder(n) vernetzten Feststoffpartikeln und den gleichmäßig verteilten anorganischen Binderkomponenten.

Bei der anschließenden Temperaturbehandlung wird der organische Binderanteil ausgetrieben und die gut infiltrierbare Porositätsstruktur erzeugt. Der anorganische Binder härtet aus bzw. schmilzt bei diesem thermischen Prozeß auf und verbindet (verklebt) so die Feststoffkörner untereinander. Der Grünkörper wird hierbei zumindest so weit erwärmt, daß der organische Anteil sowie eventuell vorhandenes Kristallwasser ausgetrieben wird. Außerdem muß sichergestellt werden, daß der anorganische Binder aushärten bzw. aufschmelzen kann, um so die Feststoffpartikel miteinander zu verkleben. Die für diesen Vorgang erforderliche Temperatur richtet sich also nach dem eingesetzten anorganischen Bindemittel. Sintertemperaturen sind nicht erforderlich. Im allgemeinen reicht es aus, wenn der Grünkörper mit einer Aufheizgeschwindigkeit von 50 bis 2000 K/h auf 600 bis 1500°C an Luft, in einer Schutzgasatmosphäre oder im Vakuum aufgeheizt und für 0 bis 5 Stunden bei der Maximaltemperatur gehalten wird. Inerte Bedingungen sind dann erforderlich, wenn oxidationsempfindliche Feststoffe oder Bindersysteme zur Anwendung kommen. Der organische Anteil ebenso wie eventuell vorhandenes Kristallwasser wird bereits bei Temperaturen unter 500°C ausgetrieben.

Falls erforderlich, kann das erhaltene Formteil einer mechanischen Bearbeitung, beispielsweise durch Drehen, Fräsen, Bohren, Schleifen oder ähnliches zugeführt werden.

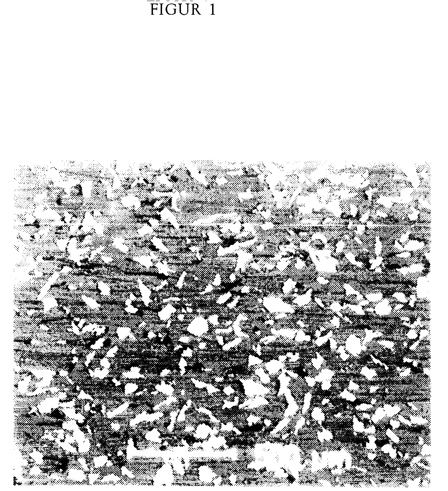

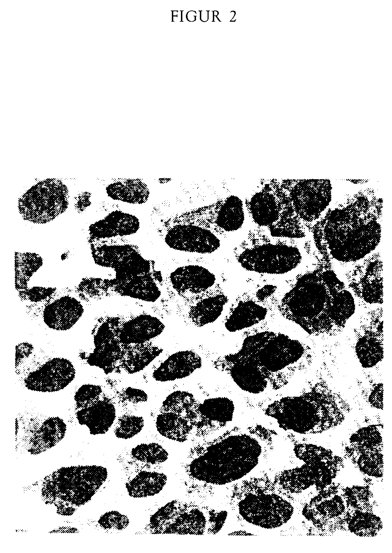

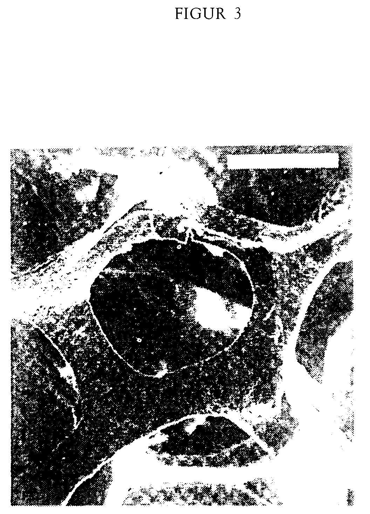

Auf diese Weise erhält man zweiphasige, selbsttragende, hochporöse Formteile, die eine hervorragende Verteilungshomogenität hinsichtlich der Feststoff-/Bindemittelphase(n) auf der einen und den Poren auf der anderen Seite aufweisen. Zweiphasig im Sinne der vorliegenden Erfindung bedeutet, daß das erfindungsgemäße Formteil aus einer Feststoffphase und einer Bindemittelphase besteht. Sowohl die Feststoff- als auch die Bindemittelphase kann jedoch aus einem oder mehreren Bestandteil/en bestehen. Zur qualitativen und quantitativen Beschreibung der Verteilungshomogenitäten der erfindungsgemäßen Formteile kann die sog. Quadratrastermethode herangezogen werden (H. Wendrock, G. Ehrlich: "Homogenitätsbeurteilung von mehrphasigen Festkörpern und Festkörpergemischen", ZFW Dresden, 1990). Hierbei werden die zu charakterisierenden Gefügeschliffe in quadratische Meßfenster unterteilt. In mehreren Meßserien mit jeweils unterschiedlicher Meßfenstergröße wird in einer statistisch ausreichenden Zahl von Testquadraten jeweils die Objektanzahl bzw. der Flächenanteil ermittelt und die Standardabweichung berechnet. Die Auswertung der Meßfenster kann halb- bzw. vollautomatisch über Punkt-, Linear- oder Flächenanalyse erfolgen. Bezieht man die Standardabweichung auf die entsprechende Meßfenstergröße (-kantenlänge), so wird als Homogenitätskenngröße diejenige Stelle vorgeschlagen, an der die Standardabweichung deutlich ansteigt (Figur 1). Bei den erfindungsgemäßen hochporösen Formkörpern liegt dieser Wert bei ca. 150 bis 250 µm (Figur 2). Bei porösen Formkörpern, die beispielsweise nach einem Schaumverfahren mit Porengrößen von 1 bis 4 mm hergestellt sind, liegt die Homogenitätsgrenze bei 3.000 bis 10.000 µm (Figur 3). Auch bei Porengrößen von wenigen hundert µm liegt der Grenzwert noch bei 500 bis 1.000 µm. Mit noch kleineren Poren kann der hohe Porositätsanteil nicht mehr erreicht werden.

Ein weiterer Vorteil der erfindungsgemäßen Formkörper besteht in dem besonders günstigen Verhältnis der Porengröße zur Korngröße.

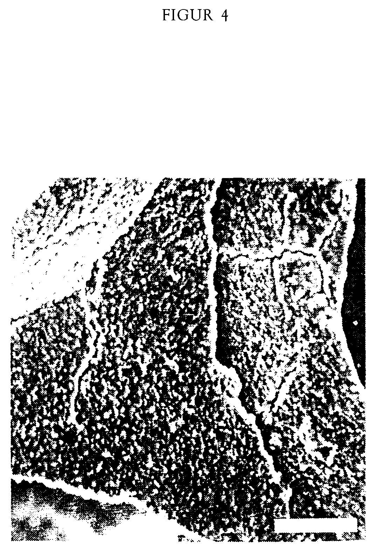

Während beispielsweise die nach einem Schaumverfahren hergestellten Formkörper selbst bei kleineren Poren Porengrößen aufweisen, die bis zu mehreren Zehnerpotenzen über der mittleren Korngröße der eingesetzten Feststoffe liegen (Figur 4 und 5), ist die Porengröße der erfindungsgemäßen Formkörper nur um den Faktor 2 bis 5 größer als die mittlere Korngröße der eingesetzten Feststoffe.

Verwendet werden können die erfindungsgemäßen Formteile beispielsweise zur Herstellung von feststoffverstärkten Bauteilen aber auch als Leichtbaustein, als Trägermaterial für andere flüssige oder feste Phasen, als Isolations-, Konstruktions-, Füll- oder Filtermaterial. Die hochporösen erfindungsgemäßen Formteile erlauben durch die Verwendung konventioneller Umschmelzverfahren selbst die Infiltration der Formteile mit untereutektischer konventioneller Umschmelzlegierung.

Aufgrund der hohen Porosität des erfindungsgemäßen Formteils kann es sowohl im sogenannten Squeeze-Casting-Verfahren, als auch im konventionellen Druckgießverfahren umgossen werden. Die hohe Stabilität und texturfreie Ausbildung des Formteils ermöglicht die Anwendung von sehr hohen Eingießgeschwindigkeiten und ist daher ganz besonders geeignet für das konventionelle, wirtschaftlich sehr attraktive Druckgießverfahren.

Wie die Vergleichsversuche zeigen, können bei anderen pulvertechnologischen Formgebungsverfahren nicht die Porositäten erzeugt werden, die für eine beim Druckguß übliche Infiltrationsgeschwindigkeit notwendig sind. Des weiteren ist der Feststoffanteil nicht auf die nach dem erfindungsgemäßen Verfahren möglichen niedrigen Werte zu reduzieren.

Die nachfolgenden Beispiele sollen die Erfindung näher erläutern ohne sie jedoch einzuschränken:

### Beispiel 1; Gelgießen:

1,5 Vol.-% Agar-Agar, fein gepulvert, werden in 73,5 Vol.-% Wasser unter Erwärmen auf etwa 95°C gelöst. Zu dem entstandenen Sol werden unter Rühren 18 Vol.-% Silizium der Körnung 1 bis 100 um und der Reinheit >98% zugegeben. Nach Abkühlung auf 60°C werden 7,0 Vol.-% Natronwasserglas (35%ig) zugegeben. Der resultierende, dünnflüssige Schlicker wird in eine auf ca. 40°C vorgewärmte, metallische Negativform der gewünschten Geometrie gegossen. Nach Abkühlung auf 0 bis 10°C kann das Teil entformt werden und wird anschließend bei -30°C tiefgefroren. Im gefrorenen Zustand wird es bei 10 bis 20°C und <6 mbar gefriergetrocknet. Beim Trocknen tritt dabei eine lineare Schwindung von ca. 6% auf. Nach dem Trocknen wird das Teil in einem elektrisch beheizten Ofen innerhalb von 3 Stunden auf 1000°C aufgeheizt und verfestigt. Bei dieser Temperaturbehandlung tritt eine lineare Schwindung von ca. 1% auf. Im verfestigten Zustand hat das Teil eine Dichte von 0,6 bis 0,65 g/cm³, was bei einer theoretischen Dichte des Siliziums von 2,33 g/cm³ einer Porosität von 72 bis 74% entspricht. Die Festigkeit ist für das Handling und für eine mechanische Bearbeitung ausreichend.

### Beispiel 2; Gefriergießen:

1,5 Vol.-% Methylcellulose werden in 73,5 Vol.-% Wasser gelöst. Unter Rühren werden 18 Vol.-% Silizium der Körnung 1 bis 100 um und der Reinheit >98% zugegeben. Anschließend werden 7,0 Vol.-% Natronwasserglas (35%ig) zugegeben. Der resultierende, dünnflüssige Schlicker wird in eine metallische Negativform der gewünschten Geometrie gegossen. Nach Abkühlung auf -30°C wird das Teil im gefrorenen Zustand entformt und kann anschließend sofort gefriergetrocknet oder bei -30°C zwischengelagert werden. Gefriertrocknung und Temperaturbehandlung erfolgen wie im Beispiel 1 (Gelgießen). Die erzielten Eigenschaften sind identisch.

### Vergleichsbeispiel 1; Isostatisches Pressen:

Silizium der Körnung 1 bis 100 µm und der Reinheit >98% wird in eine wasserdichte Gummiform der Abmessung 30x200 mm gefüllt. Nach dem isostatischen Pressen bei 1000 bar resultiert ein Formteil der Dichte 1,57 g/cm³. Dies entspricht einer Porosität von 33%. Eine wesentlich niedrigere Vorverdichtung, d.h. höhere Porosität ist nicht möglich, da sonst die Festigkeit für das Handling nicht ausreicht. Durch Zusatz von organischen Bindern kann die Grünfestigkeit erhöht werden. Eine Reduzierung des Preßdrucks auf 400 bar ergibt ein Formteil mit 1,43 g/cm³ Dichte, das entspricht 39% Porosität. Diese niedrigen und z.T. engen Porositäten sind für eine schnelle, homogene und mit wenig Druckaufbau verbundene Infiltration des Formteils mit einer Metallschmelze nicht ausreichend.

### Vergleichsbeispiel 2; Kernschießen:

Silizium der Körnung 1 bis 100 µm und der Reinheit >98% wird mit einem reaktiven, organischen Binder versetzt. Über das Kernschießverfahren resultieren Formteile mit ähnlichen Dichten wie beim isostatischen Pressen (1,2 bis 1,5 g/cm³). Die nur wenig höhere Porosität führt zu den gleichen Schwierigkeiten beim Infiltrieren wie bei der Formgebung durch isostatisches Pressen.

## Patentansprüche

1. Hochporöses, selbsttragendes Formteil, dadurch gekennzeichnet, daß es aus metallischen oder nichtmetallischen Feststoffen (Feststoffphase/n) und mindestens einem Bindemittel (Bindemittelphase/n) besteht, daß die Porosität 50 bis 90 Vol.-% beträgt, wobei die Feststoffpartikel durch das oder die Bindemittel miteinander verbunden sind und die Porengröße um den Faktor 2 bis 5 größer ist als die mittlere Korngröße des verwendeten Feststoffs.

2. Formteil gemäß Anspruch 1, dadurch gekennzeichnet, daß es als Feststoff organische Pulver, metallische Bestandteile oder Mischungen dieser Feststoffe enthält.

3. Formteil gemäß Anspruch 1 oder 2, dadurch gekennzeichnet, daß als organische Pulver Kohlenstoff, natürliche oder synthetische Polymere, als metallische Bestandteile Kupfer, Messing, Bronze, Magnesium, Zink, Blei, Aluminium, Silizium, Titan, Vanadium, Mangan, Eisen, Kobalt, Chrom, Molybdän, Nickel oder intermetallische Phasen der Elemente oder Carbide, Nitride, Silizide, Boride, Oxide der Elemente oder Kombinationen wie beispielsweise TiCN oder FeBₓ oder Mischungen dieser Bestandteile, als Bindemittel anorganische Binder, vorzugsweise Binder auf Phosphat-, Borat-, Sulfat-, Oxid- oder Silikatbasis eingesetzt werden.

4. Formteil gemäß Anspruch 1, 2 oder 3, dadurch gekennzeichnet, daß als Feststoff Silizium, Siliziumcarbid, Titancarbid oder Fe₃C und als Bindemittel Natronwasserglas eingesetzt wird.

5. Formteil gemäß einem der Ansprüche 1 bis 4, dadurch gekennzeichnet, daß die Feststoffe in Mengen von 10 bis 40 Vol.%, vorzugsweise 15 bis 30 Vol.-%, mit einer Korngröße von 0,5 bis 500 µm, vorzugsweise 1 bis 200 µm und das Bindemittel in Mengen von 1 bis 20 Vol.-%, vorzugsweise von 3 bis 7,0 Vol.-% eingesetzt werden.

6. Verfahren zur Herstellung eines Formteils gemäß einem der Ansprüche 1 bis 5, dadurch gekennzeichnet,
a) daß das Feststoffpulver, mindestens ein anorganischer Binder und mindestens ein organisches Bindemittel in Wasser gemischt und dispergiert werden,
b) daß der Gießschlicker je nach eingesetztem organischem Bindemittel entweder nach dem Gelgießverfahren oder nach dem Gefriergießverfahren in die dem Formteil entsprechende negative Gießform gegossen wird,
c) daß nach dem Verfestigen des Schlickers das Formteil der Form entnommen und anschließend eingefroren wird,
d) daß das erhaltene, eingefrorene Formteil in einem Vakuum von maximal 600 Pa (6 mbar), bei 0 bis 60°C getrocknet wird und
e) daß anschließend der Grünkörper auf eine Temperatur aufgeheizt wird, die sicherstellt, daß der anorganische Binder aushärten bzw. aufschmelzen kann.

7. Verfahren zur Herstellung eines Formteils gemäß Anspruch 6, dadurch gekennzeichnet, daß der Grünkörper an Luft, in einer Schutzgasatmosphäre oder im Vakuum auf 600 bis 1500°C aufgeheizt und bis zu 5 Stunden bei der Maximaltemperatur gehalten wird.

8. Verfahren zur Herstellung eines Formteils gemäß Anspruch 6 oder 7, dadurch gekennzeichnet, daß das organische Bindemittel aus wasserlöslichen und/oder dispergierbaren Bindemitteln, wie beispielsweise Methylcellulose, Polyvinylalkohol, Alginat, Stärke oder Agar-Agar oder auch aus Kombinationen dieser Mittel besteht.

9. Verfahren zur Herstellung eines Formteils gemäß Anspruch 6, 7 oder 8, dadurch gekennzeichnet, daß bei der Herstellung des Gießschlickers ein Stellmittel, beispielsweise Bentonit und/oder ein Entschäumer zugesetzt wird.

10. Verfahren zur Herstellung eines Formteils gemäß einem der Ansprüche 6 bis 9, dadurch gekennzeichnet, daß der Gießschlicker während des Rührens bis auf über 90°C erwärmt wird.

11. Hochporöses, selbsttragendes Formteil herstellbar nach einem Verfahren gemäß einem der Ansprüche 6 bis 10.

12. Verwendung des Formteils gemäß einem der Ansprüche 1 bis 5 oder 11 zur Herstellung von feststoffverstärkten Bauteilen.

13. Verwendung des Formteils gemäß einem der Ansprüche 1 bis 5 oder 11 als Leichtbaustein, als Trägermaterial für andere flüssige oder feste Phasen, als Isolations-, Konstruktions, Füll- oder Filtermaterial.

## Claims

1. Highly porous, self-supporting moulded article, characterised in that it consists of metallic or non-metallic solids (solid phase/s) and at least one binding agent (binding agent phase/s), in that the porosity amounts to 50 to 90% by volume, with the solid particles being connected to each other by the binding agent or agents and the pore size being larger by the factor 2 to 5 than the average grain size of the solid which has been used.

2. Moulded article according to claim 1, characterised in that it contains, as solid organic powders, metallic components or mixtures of these solids.

3. Moulded article according to claim 1 or 2, characterised in that carbon, natural or synthetic polymers are used as organic powders, copper, brass, bronze, magnesium, zinc, lead, aluminium, silicon, titanium, vanadium, manganese, iron, cobalt, chromium, molybdenum, nickel or intermetallic phases of the elements or carbides, nitrides, silicides, borides, oxides of the elements or combinations such as TiCN or FeBₓ, for example, or mixtures of these components are used as metallic components, and inorganic binders, preferably phosphate-based, borate-based, sulphate-based, oxide-based or silicate-based binders, are used as binding agents.

4. Moulded article according to claim 1, 2 or 3, characterised in that silicon, silicon carbide, titanium carbide or Fe₃C is used as a solid and sodium silicate is used as a binding agent.

5. Moulded article according to one of claims 1 to 4, characterised in that the solids are used in quantities of 10 to 40% by volume, preferably 15 to 30% by volume, having a grain size of 0.5 to 500 µm, preferably 1 to 200 µm, and the binding agent is used in quantities of 1 to 20% by volume, preferably 3 to 7% by volume.

6. Method for preparing a moulded article according to one of claims 1 to 5, characterised
a) in that the solid powder, at least one inorganic binder and at least one organic binding agent are mixed and dispersed in water,
b) in that, depending on the organic binding agent which is used, the castable slip is poured into the negative casting mould which corresponds to the moulded article either according to the gel casting method or according to the freeze casting method,
c) in that after the slip has solidified, the moulded article is removed from the mould and subsequently frozen,
d) in that the frozen moulded article which is obtained is dried at 0 to 60°C in a vacuum of maximum 600 Pa (6 mbar), and
e) in that the green body is subsequently heated to a temperature which ensures that the inorganic binder can harden or fuse on.

7. Method for preparing a moulded article according to claim 6, characterised in that the green body is heated to 600 to 1500°C in air, in a protective atmosphere or in a vacuum, and is kept at the maximum temperature for up to 5 hours.

8. Method for preparing a moulded article according to claim 6 or 7, characterised in that the organic binding agent consists of water-soluble and/or dispersable binding agents, such as, for example, methyl cellulose, polyvinyl alcohol, alginate, starch or agar-agar or even combinations of these agents.

9. Method for preparing a moulded article according to claim 6, 7 or 8, characterised in that, during the preparation of the casting slip, a suspension agent, for example bentonite, and/or a defoaming agent is added.

10. Method for preparing a moulded article according to one of the claims 6 to 9, characterised in that the casting slip is heated to above 90°C during the stirring.

11. Highly porous, self-supporting moulded article which can be prepared in accordance with a method according to one of the claims 6 to 10.

12. Use of the moulded article according to one of the claims 1 to 5 or 11 for preparing solid-reinforced building components.

13. Use of the moulded article according to one of claims 1 to 5 or 11 as a lightweight building block, as a carrier material for other liquid or solid phases, as an insulating material, a constructional material, a filling material or a filtering material.

## Revendications

1. Pièce moulée autoporteuse, hautement poreuse, caractérisée en ce qu'elle est constituée de matières solides métalliques ou non métalliques (phase(s) solide(s)) et d'au moins un liant (phase(s) de liant), en ce que sa porosité est de 50 à 90 % en volume, les particules solides étant liées par le ou les liants et la taille des pores étant supérieure d'un facteur 2 à 5 à la taille moyenne des particules solides utilisées.

2. Pièce moulée selon la revendication 1, caractérisée en ce qu'elle contient comme matière solide une poudre organique, des constituants métalliques ou un mélange de ces matières solides.

3. Pièce moulée selon la revendication 1 ou 2, caractérisée en ce que l'on utilise, comme poudre organique, du carbone ou des polymères naturels ou synthétiques, en ce que l'on utilise comme constituants métalliques du cuivre, du laiton, du bronze, du magnésium, du zinc, du plomb, de l'aluminium, du silicium, du titane, du vanadium, du manganèse, du fer, du cobalt, du chrome, du molybdène, du nickel ou des composés intermétalliques de ces éléments, ou des carbures, des nitrures, des siliciures, des borures ou des oxydes de ces éléments, ou des combinaisons comme par exemple TiCN ou FeBₓ, ou des mélanges de ces constituants, et en ce que l'on utilise en tant que liant, des liants minéraux, de préférence des liants à base de phosphate, de borate, de sulfate, d'oxyde ou de silicate.

4. Pièce moulée selon la revendication 1, 2 ou 3 caractérisée en ce que l'on utilise comme matière solide du silicium, du carbure de silicium, du carbure de titane ou du Fe₃C, et comme liant du silicate de soude.

5. Pièce moulée selon une des revendications 1 à 4, caractérisée en ce que l'on utilise les matières solides à raison de 10 à 40 % en volume, de préférence à raison de 15 à 30 % en volume, ces matières ayant une taille de particules de 0,5 à 500 µm, de préférence de 1 à 200 µm, et en ce que l'on utilise le liant à raison de 1 à 20 % en volume, de préférence à raison de 3 à 7,0 % en volume.

6. Procédé de fabrication d'une pièce moulée selon l'une quelconque des revendications 1 à 5, caractérisé
a) en ce que l'on mélange et disperse la poudre de matière solide, au moins un liant minéral et au moins un liant organique dans de l'eau,
b) en ce que l'on fait couler la barbotine coulable, en fonction du type de liant organique utilisé, dans un moule négatif correspondant à la pièce moulée soit selon un procédé de coulée-gélification soit selon un procédé de coulée-congélation,
c) en ce que l'on retire la pièce moulée du moule, après solidification de la barbotine, puis en ce qu'on la congèle,
d) en ce que l'on sèche la pièce moulée congelée obtenue sous un vide de 600 Pa (6 mbar) au maximum, à une température de 0 à 60 °C, et
e) en ce que l'on chauffe ensuite la pièce verte à une température permettant de durcir ou de faire fondre le liant minéral.

7. Procédé de fabrication d'une pièce moulée selon la revendication 6, caractérisé en ce que l'on chauffe la pièce verte à l'air libre, dans une atmosphère de protection ou sous vide à une température de 600 à 1500 °C et on ce que l'on maintient la pièce pendant 5 heures à la température maximale.

8. Procédé de fabrication d'une pièce moulée selon la revendication 6 ou 7, caractérisé en ce que le liant organique est constitué de liants hydrosolubles et/ou dispersibles, tels que la méthylcellulose, le poly(alcool vinylique), l'alginate, l'amidon ou l'agar-agar ou d'une combinaison de ces substances.

9. Procédé de fabrication d'une pièce moulée selon la revendication 6, 7 ou 8, caractérisé en ce que l'on ajoute lors de la préparation de la barbotine, un adjuvant, par exemple de la bentonite, et/ou un agent anti-mousse.

10. Procédé de fabrication d'une pièce moulée selon une des revendications 6 à 9, caractérisé en ce que la barbotine est chauffée sous agitation jusqu'à une température supérieure à 90 °C.

11. Pièce moulée autoporteuse hautement poreuse que l'on peut fabriquer selon le procédé défini dans une des revendications 6 à 10.

12. Utilisation de la pièce moulée conforme à une des revendications 1 à 5 ou 11 pour la fabrication de pièces de construction renforcées par des matières solides.

13. Utilisation de la pièce moulée conforme à une des revendications 1 à 5 ou 11 comme brique de construction à faible densité, comme matériau support pour d'autres phases liquides ou solides, en tant que matériau d'isolation, de construction, de remplissage ou de filtration.
